(19)

Europäisches
Patentamt
European
Patent Office
Office européen
des brevets

(11) **EP 3 355 569 A1**

(12) **EUROPEAN PATENT APPLICATION**

(43) Date of publication:
01.08.2018 Bulletin 2018/31

(51) Int Cl.:
*H04N 1/46* (2006.01)          *B33Y 10/00* (2015.01)
*B33Y 30/00* (2015.01)          *B33Y 50/02* (2015.01)
*B29C 64/393* (2017.01)          *B29C 64/112* (2017.01)

(21) Application number: 18153083.3

(22) Date of filing: 23.01.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 27.01.2017 EP 17153554

(71) Applicant: OCE Holding B.V.
5914 CA Venlo (NL)

(72) Inventors:
• ORTIZ SEGOVIA, Maria V.
5914 CA Venlo (NL)
• BOUST, Marie P.
5914 CA Venlo (NL)
• PAGE, Marine
5914 CA Venlo (NL)
• OBEIN, Gaël
5914 CA Venlo (NL)

(74) Representative: OCE IP Department
St. Urbanusweg 43
5914 CA Venlo (NL)

(54) **METHOD OF IMPROVING RELIEF PRINTS**

(57)    A method for improving a rendering of details of a relief print is described. A reciprocating print head for layerwise applying material on a flat substrate moving relatively to the print head in a direction transverse to the reciprocating direction is used. A height channel of the image data for the relief print, indicating a number of material layers that produce a relief on the substrate, is processed. The method comprises the steps of: providing a test pattern comprising both a modulated relief pattern in the reciprocating direction and the transverse direction; measuring from the test pattern an output height modulation for both directions and determining a height modulation transfer function therefrom; determining a modified height value by a deconvolution of values in the height channel and the modulation transfer functions, and producing the relief print from the colour channels of the image data and the modified height values.

Fig. 2

EP 3 355 569 A1

**Description**

BACKGROUND OF THE INVENTION

1. Field of the invention

The invention relates to methods for improving a rendering of details of a relief print in a print proces using a reciprocating print head for layerwise applying material on a flat substrate moving relatively to the print head in a direction transverse to the reciprocating direction, by processing image data for the relief print, the image data comprising a number of colour channels for rendering an image in colour and a height channel for indicating a number of material layers that produce a relief on the substrate. The invention further relates to a print system for printing relief prints and a non-transitory computer-readable storage medium containing instructions to process image data for a relief print.

2. Description of the Related Art

It is known to generate objects by applying material layerwise on a flat substrate. One kind of objects is known as relief prints or elevated prints. These are generated in a similar way as common colour prints, wherein pixels of an image as defined by a number of values referring to a colour content of the pixels, are rendered by applying colorants in the form of ink or toner, in accordance with the colour content. These values are referred to as the colour channels of the image data. For a relief print an additional channel is used to define a height of a pixel, thus indicating a number of layers of an arbitrary colorant that is to be applied. A relief print comprises a relief part in accordance with this height for each pixel, a white part for an optical separation and a colour part that is applied in accordance with the colour for each pixel. During the generation of a relief print, the image data are converted into image layers, an image layer comprising pixels of either relief, white, or colour part, which are applied next to each other.
In dependence on a print process that is used to convert the relief image data into a relief print, there may be some loss of detail due to the limitations of the print process. An often applied process is a UV-curable ink print process, wherein subsequent image layers are printed and cured by UV-light. Before curing the ink is a low viscosity fluid, whereas after curing it behaves as solid matter. In the print process the ink is applied by a reciprocating carriage comprising print heads that are controlled to apply colorant in swaths to a substrate. In-between various swaths, the carriage is stepwise moved relative to the substrate. This means that either the carriage or the substrate is moved in such a way that a fresh part of the substrate becomes available for printing.
It has been found by the inventors that in dependence on print parameters such as the amount of UV-energy that is used for curing, the size of the droplets that are used to make the relief part, and the type of ink used for making the relief print, there is a difference in detail rendering for height differences in the reciprocating direction and in a direction transverse to this. The effect is that a relief print looks different depending on an orientation of the substrate, which is unwanted.
An object of the present invention is to obviate this effect.

SUMMARY OF THE INVENTION

In order to achieve this object, the method according to the invention comprises the steps of:

> a) providing a test pattern comprising both a modulated relief pattern in the reciprocating direction and a modulated relief pattern in the transverse direction;
> b) measuring from the test pattern a height modulation transfer function for the reciprocating direction and a height modulation transfer function for the transverse direction;
> c) determining a modified height value by a deconvolution of values in the height channel and the modulation transfer functions, and
> d) producing the relief print from the colour channels of the image data and the modified height values.

The height modulation transfer function (HTMF) characterizes the degree wherein a print system is able to reproduce an arbitrary height input profile as indicated in the height channel of the input image data. The difference of the HTMF in the two main directions, parallel to the reciprocating direction and transverse to it, is found to determine the effect as described above. A deconvolution transform is known to restore values that are filtered in a conversion proces, in this case a print proces. Considering the height channel as a two-dimensional input function, a modified height value may be determined that compensates the expected filter action by the print proces. Thus, a direction difference in detail rendering is diminished by compensating a difference in HMTF for both directions.
In a further embodiment, the modulated relief pattern comprises a number of rectangular bars of various width and height oriented perpendicular to the modulation direction. Other patterns are possible, such as a triangular pattern, but the rectangular bars have proven to give the most direct measure for the HTMF.

In a further embodiment, the height modulation transfer function is measured using a confocal microscope. A high lateral resolution and a high signal to noise ratio for the height measurement is necessary to determine a height profile. These are traditional advantages of a confocal microscope. Moreover, the information in the height direction is reached easily without moving the sensor. Resolution in height may be as small as 10 nm (nanometer).

In a further embodiment, the deconvolution in step c comprises a Wiener filter. This filter is known to reduce noise in the modified height channel.

Further details of the invention are given in the dependent claims. The present invention may also be embodied in a print system and in a non-transitory computer-readable storage medium containing instructions to process image data for a relief print.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figure 1 shows a rectangular height modulation pattern that is used as a test pattern;

Figure 2 is the orientation of the test patterns relative to the print direction, and

Figure 3 is a diagram showing the steps of an embodied method.

DETAILED DESCRIPTION OF EMBODIMENTS

The present invention will now be described with reference to the accompanying drawings, wherein the same or similar elements are identified with the same reference numeral.

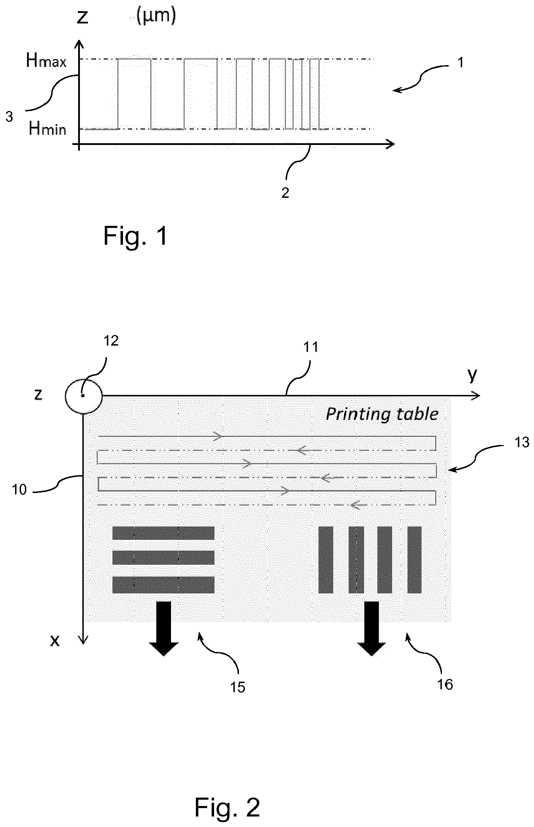

Figure 1 shows a height modulation 1 between a maximum height $H_{max}$ and a minimum height $H_{min}$ with a gradually increasing frequency along the vertical z-axis 3, as a function of a lateral distance on the horizontal axis 2. This modulation function is used as an input for a relief print with a uniform colour. The response of the print system is measured as an output modulation function, wherein the parameters $H_{max}^{out}$ as a maximum height and $H_{min}^{out}$ as a minimum height are discernable. In this one-dimensional representation, the height modulation transfer function ($HTMF$) is given by

$$HTMF = \frac{modulation\ output}{modulation\ input}\ , \tag{1}$$

$$modulation\ output = \frac{H_{max}^{out} - H_{min}^{out}}{H_{max}^{out} + H_{min}^{out}}$$

and

$$modulation\ input = \frac{H_{max} - H_{min}}{H_{max} + H_{min}}\ .$$

This value is determined as a function of the repetition frequency $f_x$ , if x is the modulation direction as indicated for pattern 15 in Figure 2. The function $HTMF$ is also determined for pattern 16 as a function of the repetition frequency $f_y$ in the y direction. As shown in Figure 2 these directions are relative to the flatbed printing table across which a print head having an array of nozzles parallel to the direction 10 moves along a trajectory 13 in a direction 11. Between the reciprocating movements the print head moves stepwise in the transverse direction 10 for a complete coverage of the surface of a substrate on the printing table. In the present embodiment an Oce Arizona Large Format UV flatbed printer with four colour inks (CMYK) and an additional white ink print head has been used.

After measuring the *HTMF* as function of both frequencies $f_x$ and $f_y$, the deconvolution for an arbitrary input height $h(x,y)$ is calculated through its Fourier transform $\mathcal{F}$ :

$$H(f_x, f_y) = \mathcal{F}\{ h(x,y) \} \qquad (2)$$

A modified input height value $h'$ for a position x,y is determined using the inverse Fourier transform $\mathcal{F}^{-1}$ :

$$h'(x,y) = \mathcal{F}^{-1} [ H(f_x, f_y) / HTMF ] = \mathcal{F}^{-1} [ \mathcal{F}\{ h(x,y) \} / HTMF ] \qquad (3)$$

In order to reduce noise in the output values, a Wiener filter may be employed, that reduces the contribution of frequencies with a low signal-to-noise ratio (SNR):

$$h'(x,y) = \mathcal{F}^{-1} [ W \times H(f_x, f_y) / HTMF ] ,$$
$$W = HTMF^2 / ( HTMF^2 + SNR ) \qquad (4)$$

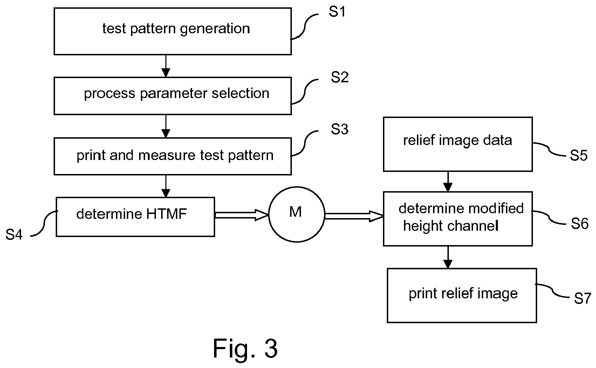

A stepwise procedure for the above is illustrated in Figure 3. In step S1 a test pattern is generated. The patterns are rectangular bars with repetition frequencies of 0.4, 1.2, 2.0, and 3.0 mm$^{-1}$ . Alternatively, a triangular shape may be used with similar frequencies. The height parameters $H_{max}$ and $H_{min}$ are selected from a range of [30, 200] and [0, 160] micrometers, respectively. The bars are printed in two directions, as indicated in Fig. 2.

The print process is applied with the lowest ink drop size and fixed UV light energy. A larger ink drop size may be used for a more productive operation, but may affect the obtained result. These print parameters are set in step S2 and are kept as part of the calibration parameters. After printing and measuring the test pattern in step S3, the resulting HTMF values for both directions as determined in step S4 from equation (1) are stored in a memory M along with the print parameters. The measurementents of the bars in a range of 0 to 300 micrometers are preferentially done with a confocal microscope with chromatic sensor. For a reliable result, each pattern is measured three times. Although discrete points of the HTMF are obtained, a low-pass filter characteristic is deduced from these measurements.

A relief image that is to be printed with improved detail rendering is obtained in step S5. The height channel is modified in step S6 according to equations (2) to (4) using the calibration parameters that were saved in memory M. This modified height channel is then used in printing the relief image in step S7 instead of the original height channel, thereby making the print direction invisible.

The invention being thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. A method for improving a rendering of details of a relief print in a print proces using a reciprocating print head for layerwise applying material on a flat substrate moving relatively to the print head in a direction transverse to the reciprocating direction, by processing image data for the relief print, the image data comprising a number of colour channels for rendering an image in colour and a height channel for indicating a number of material layers that produce a relief on the substrate, the method comprising the steps of:

   a) providing a test pattern comprising both a modulated relief pattern in the reciprocating direction and a modulated relief pattern in the transverse direction, both modulated relief patterns comprising at least two repetition frequencies;
   b) measuring from the test patterns an output height modulation for each frequency and determining a height modulation transfer function for the reciprocating direction and a height modulation transfer function for the transverse direction by dividing the output height modulation by the input height modulation for each frequency;
   c) determining for the height channel of the image data a modified height value by a deconvolution of values in the height channel and the modulation transfer functions, and

d) producing the relief print from the colour channels of the image data and the modified height values.

2. The method according to claim 1, wherein the modulated relief pattern comprises a number of rectangular bars of various width and height oriented perpendicular to the modulation direction.

3. The method according to claim 1, wherein the output height modulation is measured using a confocal microscope.

4. The method according to claim 1, wherein the deconvolution in step c comprises a Wiener filter.

5. A print system for printing relief prints using a reciprocating print head for layerwise applying material on a flat substrate moving relatively to the print head in a direction transverse to the reciprocating direction, an image data processing module for processing image data comprising a number of colour channels for rendering an image in colour and a height channel for indicating a number of material layers that produce a relief on the substrate into print data for controlling the print head, the image data processing module configured to perform the method according to claim 1.

6. A non-transitory computer-readable storage medium containing instructions to process image data for a relief print, the image data comprising a number of colour channels for rendering an image in colour and a height channel for indicating a number of material layers that produce a relief on a substrate, the instructions when executed by a processor causing the processor to perform the steps of the method according to claim 1.

Fig. 1

Fig. 2

| test pattern generation | S1 |

| process parameter selection | S2 |

| print and measure test pattern | S3 |

| relief image data | S5 |

| determine HTMF | S4 |

M

| determine modified height channel | S6 |

| print relief image | S7 |

## Fig. 3

Europäisches
Patentamt

European
Patent Office

Office européen
des brevets

## EUROPEAN SEARCH REPORT

Application Number

EP 18 15 3083

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 205 691 B1 (JONES TIMOTHY J [US] ET AL) 8 December 2015 (2015-12-08) * page 1 - page 3 * ----- | 1-6 | INV. H04N1/46 B33Y10/00 B33Y30/00 |
| A | WO 2016/173668 A1 (HEWLETT-PACKARD DEV COMPANY L P [US]; LOPEZ MIGUEL ANGEL [ES]; RODRIGU) 3 November 2016 (2016-11-03) * page 3 - page 5; figures 3,4 * ----- | 1-6 | B33Y50/02 B29C64/393 B29C64/112 |
| A | Anonymous: "Understanding Kudo3D High Resolution Calibration Model - Kudo3D Inc.", , 22 July 2016 (2016-07-22), XP055371414, Retrieved from the Internet: URL:https://www.kudo3d.com/understanding-k udo3d-high-resolution-calibration-model/ [retrieved on 2017-05-10] * the whole document * ----- | 1-6 | |
| A | Lexing Xie: "Image restoration", Digital Image Processing, 23 March 2009 (2009-03-23), XP055372365, New York Retrieved from the Internet: URL:http://www.ee.columbia.edu/˜xlx/ee4830 /notes/lec7.pdf [retrieved on 2017-05-12] * page 31 - page 45 * ----- | 1-6 | TECHNICAL FIELDS SEARCHED (IPC) B29C B33Y H04N |

-/--

The present search report has been drawn up for all claims

| Place of search | Date of completion of the search | Examiner |
|---|---|---|
| The Hague | 31 May 2018 | Lauritzen, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 15 3083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Dong Wei ET AL: "Wavelet denoising for image enhancement; Basic methods for image restoration and identification" In: "Handbook of Image and Video Processing", 7 June 2005 (2005-06-07), Elsevier Science, XP055374808, ISBN: 978-0-08-053361-2 pages 157-181, * Section 3.2; page 172 - page 173 * ----- | 1-6 | |
| A | US 2007/296959 A1 (SCHWOTZER AXEL [DE]) 27 December 2007 (2007-12-27) * the whole document * ----- | 1-6 | |

TECHNICAL FIELDS SEARCHED (IPC)

The present search report has been drawn up for all claims

| Place of search | Date of completion of the search | Examiner |
|---|---|---|
| The Hague | 31 May 2018 | Lauritzen, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 3083

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | | | Publication date | Patent family member(s) | | | Publication date |
|---|---|---|---|---|---|---|---|
| US 9205691 | | B1 | 08-12-2015 | NONE | | | |
| WO 2016173668 | | A1 | 03-11-2016 | US | 2018036949 | A1 | 08-02-2018 |
| | | | | WO | 2016173668 | A1 | 03-11-2016 |
| US 2007296959 | | A1 | 27-12-2007 | CN | 101115970 | A | 30-01-2008 |
| | | | | DE | 102004059526 | A1 | 14-06-2006 |
| | | | | DK | 1825217 | T3 | 01-02-2016 |
| | | | | EP | 1825217 | A1 | 29-08-2007 |
| | | | | JP | 5341351 | B2 | 13-11-2013 |
| | | | | JP | 2008523370 | A | 03-07-2008 |
| | | | | US | 2007296959 | A1 | 27-12-2007 |
| | | | | WO | 2006061347 | A1 | 15-06-2006 |

EPO FORM P0459

For more details about this annex : see Official Journal of the European Patent Office, No. 12/82